# EUROPEAN PATENT SPECIFICATION

(11) **EP 3 024 276 B1**
(45) Date of publication and mention of the grant of the patent: **20.09.2017**
(21) Application number: 14782490.8
(22) Date of filing: 10.06.2014
(51) Int. Cl.: H04W 36/24, H04W 84/04

(54) **MOBILITY PROCESSING METHOD, DEVICE, AND COMPUTER STORAGE MEDIUM**
MOBILITÄTSVERARBEITUNGSVERFAHREN, VORRICHTUNG SOWIE COMPUTERSPEICHERMEDIUM
PROCÉDÉ DE TRAITEMENT DE MOBILITÉ ET DISPOSITIF ET SUPPORT D'INFORMATIONS INFORMATIQUE ASSOCIÉS

(30) Priority: 17.07.2013 CN 201310300619
(43) Date of publication of application: 25.05.2016
(73) Proprietor: ZTE Corporation, Shenzhen, Guangdong 518057 (CN)
(72) Inventor: ZHANG, Zhengquan, Shenzhen Guangdong 518057 (CN)
(74) Representative: Lavoix
(86) International application number: PCT/CN2014/079622
(87) International publication number: WO 2014/166459

(56) References cited:
- EP-A1- 2 523 501
- WO-A1-2013/055087
- CN-A- 102 104 921
- CN-A- 102 123 434
- CN-A- 102 598 776
- US-A1- 2012 106 349
- ZTE: "Correction of Mobility to HeNB's CSG and hybrid c", 3GPP DRAFT; R3-131006, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Fukuoka, Japan; 20130520 - 20130524 10 May 2013 (2013-05-10), XP050700955, Retrieved from the Internet: URL:http://www.3gpp.org/ftp/tsg_ran/WG3_Iu /TSGR3_80/Docs/ [retrieved on 2013-05-10]
- ZTE: "Proximity indication handling for handover", 3GPP DRAFT; R2-100327_PROXIMITY INIDICATION HANDLING FOR HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050421029, [retrieved on 2010-01-12]

## Description

### TECHNICAL FIELD

The present disclosure relates to communications technology, and in particular to a method, device and computer storage medium for mobility processing.

### BACKGROUND

In a Long Term Evolution (LTE) communication system, when User Equipment (UE) moves to a Closed Subscriber Group (CSG)/hybrid cell, a switching process, which is still implemented with network control and assistance from the UE, includes three phases: preparation for the switching, execution of the switching and accomplishment of the switching. The switching process described above differs from an ordinary switching process in three aspects: proximity estimation, Packet Scheduling (PSC)/Physical Cell identifier (PCI) conflict and access control. The proximity estimation indicates that UE uses a function of automatic search to determine the UE approaches to a CSG cell or hybrid cell present in a white list of CSGs for the UE. The PSC/PCI conflict indicates that a PSC/PCI conflict originated from possible multiple Home Node Bs (HNBs)/Home evolved Node Bs (HeNBs) covered in a macro cell should be addressed in a manner that the UE reports the global cell identifier of a target HNB/HeNB. The access control indicates that resources are allocated according to priorities based on a member state of the UE in the case that the target cell is a hybrid cell.

The UE reports each proximity indication according to Radio Access Technology (RAT)/carrier frequency. If the UE leaves all CSG cells with one RAT and carrier frequency, a proximity indication for leaving is reported immediately. If the UE enters one or more CSG cell with one RAT and carrier frequency and has not reported a proximity indication for entering previously, a proximity indication for entering is reported immediately. If a proximity indication for entering with respect to one RAT and carrier frequency has been reported, a next proximity indication for entering won't be report within 5 seconds. The manner in which the UE reports the proximity indication leads to situations where a source HeNB receives a proximity indication again during switching of the UE to a CSG/hybrid cell or where a proximity indication occurs in other processes. This makes the processes in an eNB disordered and consequently abnormalities occur.

The reference document "ZTE: 'Correction of Mobility to HeNB's CSG and hybrid c', 3GPP DRAFT R3-131006" of 10 May 2013 discloses that the UE sends an "entering" proximity indication when it determines it may be near a CSG member cell, the proximity includes the RAT and frequency of the cell; after sending an "entering" proximity indication, if the UE determines that it is no longer near a CSG member cell, the UE sends a "leaving" proximity indication to the source eNB. Upon reception of this indication, the source eNB may reconfigure the UE to stop measurements on the reported RAT and frequency, and the source eNB shall cancel the ongoing Handover Preparation procedure on the reported RAT and frequency by executing the Handover Cancel procedure with an appropriate cause value.

The reference document "ZTE: 'Proximity indication handling for handover', 3GPP DRAFT R2-100327" of 12 January 2010 discloses that after the UE has reported of proximity indication, the UE may handover to adjacent macro cell, during the period, the UE does not report leaving proximity indication, to deal with the reported proximity indication, there are two possible methods: alternative 1, including the proximity indication in the signalling of handover procedure; alternative 2, requiring the UE to report the proximity indication once more after the handover.

### SUMMARY

In order to solve current problems, the embodiments of the present disclosure provide a method, device and computer storage medium for mobility processing.

An embodiment herein provides a method for mobility processing, which includes that:
after a proximity indication reported by UE is received, decision information on an action relating to processing performed by the eNB is acquired by an evolved Node B (eNB);
an indication of a next action for processing the received proximity indication is determined by the eNB according to the decision information and the next action is executed according to the indication of the next action;
wherein the step of determining the indication of the next action for processing the received proximity indication according to the decision information comprises:
   when a current state of the UE is a stationary state, determining the indication of the next action as execution; and
   when a current state of the UE is a non-stationary state, in which the eNB executes switching of the UE to a target cell, determining the indication of the next action as interruption and execution when the proximity indication is a proximity indication for leaving in a same frequency or a proximity indication for entering with a higher priority of RAT/carrier frequency carried in the proximity indication relative to RAT/carrier frequency of the target cell in switching; determining the indication of the next action as cache when the proximity indication is a proximity indication for entering with a lower priority or a same priority of RAT/carrier frequency carried in the proximity indication relative to RAT/carrier frequency of the target cell in switching in a different frequency; otherwise, determining the indication of the next action as discard,
   wherein the proximity indication is of a same frequency or a different frequency with respect to a RAT/carrier frequency of the target cell in switching.

In above solution, the decision information may include at least one of the following:
information on a current state of the UE , information on a type of the proximity indication, and information on a priority of RAT/carrier frequency carried in the proximity indication relative to RAT/carrier frequency of a target cell in switching.
In above solution, the current state of the UE may include a stationary state and a non-stationary state in which the eNB executes switching of the UE to a target cell, and the type of the proximity indication may include a proximity indication for entering and a proximity indication for leaving,
when the decision information includes the information on the priority of the RAT/carrier frequency carried in the proximity indication relative to the RAT/carrier frequency of the target cell in switching, the step that the eNB acquires, the decision information on the action relating to the UE may include:
   priorities for different RATs/carrier frequencies are configured through a background network manager;
   when the RAT/carrier frequency carried in the proximity indication is received, determining, by the eNB, the priority of the RAT/carrier frequency carried in the proximity indication relative to the RAT/carrier frequency of the target cell in switching according to the configured priorities acquired from the background network manager.

In above solution, the indication of the next action may include at least one of thefollowing: execution, interruption and execution, cache and discard.

In above solution, the step that the next action is executed according to the indication of the next action may include:
when the indication of the next action is execution, a received proximity indication is executed immediately;
when the indication of the next action is interruption and execution, current processing is interrupted and the received proximity indication is executed;
when the indication of the next action is cache, the received proximity indication is cached, the current processing is continued, the cached proximity indication is read and executed after the current processing is finished; and
when the indication of the next action is discard, the received proximity indication is discarded and the current processing is continued.
An embodiment herein also provides a device for mobility processing, which includes: a decision information acquisition module, a decision module and a process execution module, wherein
the decision information acquisition module is configured to, when a proximity indication reported by User Equipment (UE) is received, acquire decision information on an action relating to processing performed by the eNB;
the decision module is configured to determine an indication of a next action for processing the received proximity indication for the UE according to the decision information; and
the process execution module is configured to execute the next action according to the indication of the next action;
wherein the decision information acquisition module (91) is further configured to determine whether the RAT/carrier frequency carried in the proximity indication is the same as the RAT/carrier frequency of a target cell in switching;
characterized in that, the decision module (92) is configured to:
   when a current state of the UE is a stationary state, determining the indication of the next action as execution; and
   when a current state of the UE is a non-stationary state, in which the eNB executes switching of the UE to a target cell, determine the indication of the next action as interruption and execution when the proximity indication is a proximity indication for leaving in a same frequency or a proximity indication for entering with a higher priority of RAT/carrier frequency carried in the proximity indication relative to RAT/carrier frequency of the target cell in switching; determine the indication of the next action as cache when the proximity indication is a proximity indication for entering with a lower priority or a same priority of RAT/carrier frequency carried in the proximity indication relative to RAT/carrier frequency of the target cell in switching in a different frequency; otherwise, determine the indication of the next action as discard.

In above solution, the current state of the UE may include a stationary state and a non-stationary state in which the eNB executes switching of the UE to a target cell, and the type of the proximity indication may include a proximity indication for entering and a proximity indication for leaving,
the decision information acquisition module may be further configured to, when the RAT/carrier frequency carried in the proximity indication is received, determine the priority of the RAT/carrier frequency carried in the proximity indication relative to the RAT/carrier frequency of the target cell in switching according to configured information acquired from a background network manager;
wherein the configured information are priority information configured for different RATs/carrier frequencies through a background network manager.

In above solution, the process execution module may be further configured to:
when the indication of the next action is execution, execute a received proximity indication immediately;
when the indication of the next action is interruption and execution, interrupt current processing and execute the received proximity indication;
when the indication of the next action is cache, cache the received proximity indication, continue the current processing, read and execute the cached proximity indication after the current processing is finished; and
when the indication of the next action is discard, discard the received proximity indication and continue the current processing.

An embodiment herein further provides a computer storage medium having stored therein a set of instructions that, when executed, causes at least one processor to perform the method for mobility processing as described above.

According to a method, device and computer storage medium for mobility processing provided in the embodiments of the present disclosure, after a proximity indication reported by UE is received, decision information on an action relating to the UE is acquired; an indication of a next action is determined according to the decision information and the next action is executed according to the indication of the next action. As such, the embodiments of the present disclosure determine a next action for processing based on decision information on an action relating to UE on a basis of the existing technology. In such a way, disorder occurring in the processes in a system is avoided, the processing complexity in the system is reduced, the system stability is enhanced and user experience is improved.

### BRIEF DESCRIPTION OF THE DRAWINGS

In the drawings which may not be drawn in scale, similar components in different views may be described with similar reference numbers. Similar reference numbers with different suffix of letter may represent various examples of similar components. The embodiments discussed herein are illustrated in the drawings in a manner which is exemplary but not limiting.
Fig. 1 is a process for implementing a method for mobility processing according to an embodiment of the present disclosure;
Fig. 2 is a process of an overall process after a proximity indication is received by an eNB according to an embodiment of the present disclosure;
Fig. 3 is a process of a decision process after a proximity indication is received by an eNB according to an embodiment of the present disclosure;
Fig. 4 is a flow chart of a process in which an eNB receives a proximity indication for entering and then executes the proximity indication immediately according to an embodiment of the present disclosure;
Fig. 5 is a flow chart of a process in which a current process is interrupted and a proximity indication is executed when an eNB receives a proximity indication for leaving with a same RAT/carrier frequency during the switching to a HeNB CSG/hybrid cell according to an embodiment of the present disclosure;
Fig. 6 is a flow chart of a process in which a current process is interrupted and a proximity indication is executed when an eNB receives a proximity indication for entering with a RAT/carrier frequency of higher priority during the switching to a HeNB CSG/hybrid cell according to an embodiment of the present disclosure;
Fig. 7 is a flow chart of a process in which a proximity indication is cached and a current switching is continued when an eNB receives a proximity indication for entering with a lower or same priority in a different RAT/carrier frequency during the switching to a HeNB CSG/hybrid cell according to an embodiment of the present disclosure;
Fig. 8 is a flow chart of a process in which a proximity indication is discarded when a source eNB receives a proximity indication for entering with a same RAT/carrier frequency during the switching to a HeNB CSG/hybrid cell according to an embodiment of the present disclosure;
Fig. 9 is a diagram of the component and structure of a device for mobility processing according to an embodiment of the present disclosure.

### DETAILED DESCRIPTION

The disclosure is described in detail hereafter with specific embodiments with reference to the drawings.

In the embodiments herein, after a proximity indication reported by UE is received, an eNB acquires decision information on an action relating to the UE, determines an indication of a next action according to the decision information and executes the next action according to the indication of the next action.

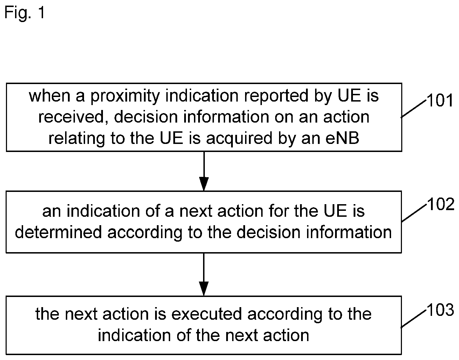

Fig. 1 is a process for implementing a method for mobility processing according to an embodiment of the present disclosure. As shown in Fig. 1, the method includes steps as follows.

In Step 101, after a proximity indication reported by UE is received, decision information on an action relating to the UE is acquired.

Specifically, the decision information may include at least one of the follows:
information on a state of current processing, information on a type of the proximity indication, and information on a priority of RAT/carrier frequency carried in the proximity indication relative to RAT/carrier frequency of a target cell in switching.

Specifically, the state of current processing may include a stationary state and a non-stationary state which may include a switching phase.

Specifically, the type of the proximity indication includes a proximity indication for entering and a proximity indication for leaving.

Specifically, when the decision information includes the information on the priority of the RAT/carrier frequency carried in the proximity indication relative to the RAT/carrier frequency of the target cell in switching, the step that the decision information on the action relating to the UE is acquired may include:
priorities for different RATs/carrier frequencies are configured through a background network manager;
when the RAT/carrier frequency carried in the proximity indication is received, the priority of the RAT/carrier frequency carried in the proximity indication relative to the RAT/carrier frequency of the target cell in switching is configured according to the configured priorities acquired from the background network manager.

In Step 102, an indication of a next action is determined according to the decision information.

Specifically, the indication of the next action may include at least one of the follows: execution, interruption and execution, cache and discard.

Specifically, the step that the indication of the next action is determined according to the decision information may include:
when a state of current processing is a stationary state, the indication of the next action is determined as execution;
when a state of current processing is a non-stationary state, the indication of the next action is determined as interruption and execution when the proximity indication is a proximity indication for leaving in a same frequency or a proximity indication for entering with a higher priority; the indication of the next action is determined as cache when the proximity indication is a proximity indication for entering with a lower priority or a same priority in a different frequency; otherwise, the indication of the next action is determined as discard,
wherein the proximity indication is of a same frequency or a different frequency with respect to a RAT/carrier frequency of a target cell in switching.

In Step 103, the next action is executed according to the indication of the next action.

Specifically, the step that the next action is executed according to the indication of the next action may include:
when the indication of the next action is execution, a received proximity indication is executed immediately;
when the indication of the next action is interruption and execution, a current process is interrupted and the received proximity indication is executed;
when the indication of the next action is cache, the received proximity indication is cached, the current processing is continued, the cached proximity indication is read and executed after the current processing is finished;
when the indication of the next action is discard, the received proximity indication is discarded and the current processing is continued.

For example, when a proximity indication for leaving is received during the switching, the current switching is interrupted and the proximity indication for leaving is executed. When a proximity indication for entering with a same priority and a different frequency is received during the switching, the proximity indication for entering is cached and the current switching is continued, and the proximity indication for entering is then read and executed after the switching is finished.

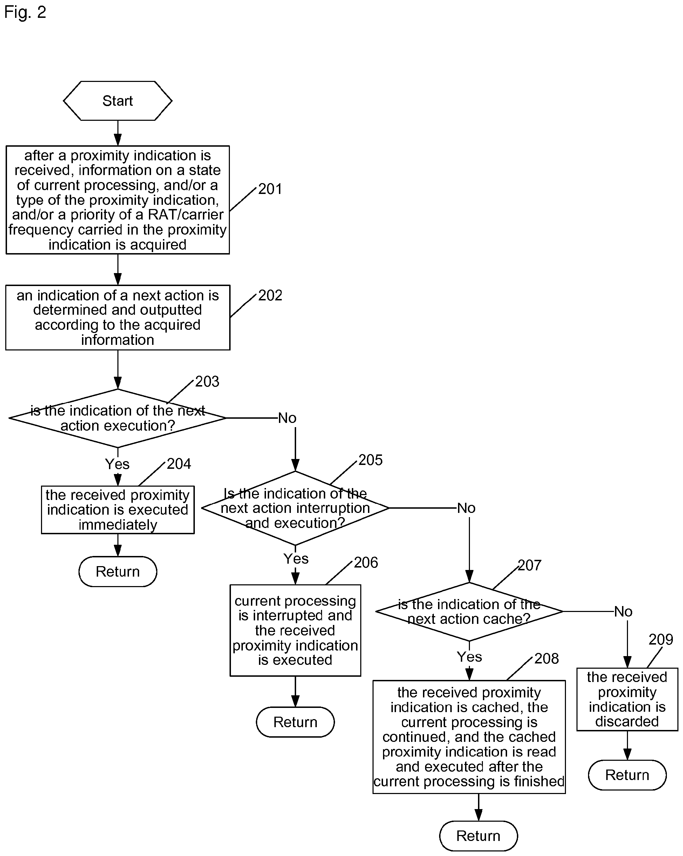

Fig. 2 is a process of an overall process after a proximity indication is received by an eNB according to an embodiment of the present disclosure. As shown in Fig. 2, the process includes steps as follows.

In Step 201, after receiving the proximity indication, an eNB acquires information on a state of current processing, and/or information on a type of the proximity indication, and/or information on a priority of a RAT/carrier frequency carried in the proximity indication.

In Step 202, the eNB determines and outputs an indication of a next action according to the information described above.

In Step 203, the eNB determines whether the indication of the next action is execution, if so, the process goes to Step 204; otherwise, the process goes to Step 205.

In Step 204, the eNB executes the received proximity indication.

In Step 205, the eNB determines whether the indication of the next action is interruption and execution, if so, the process goes to Step 206; otherwise, the process goes to Step 207.

In Step 206, the eNB interrupts current processing and executes the received proximity indication.

In Step 207, the eNB determines whether the indication of the next action is cache, if so, the process goes to Step 208; otherwise, the process goes to Step 209.

In Step 208, the eNB caches the received proximity indication and continues the current processing, then reads and executes the cached proximity indication after the current processing is finished.

In Step 209, the eNB discards the received proximity indication without any processing.

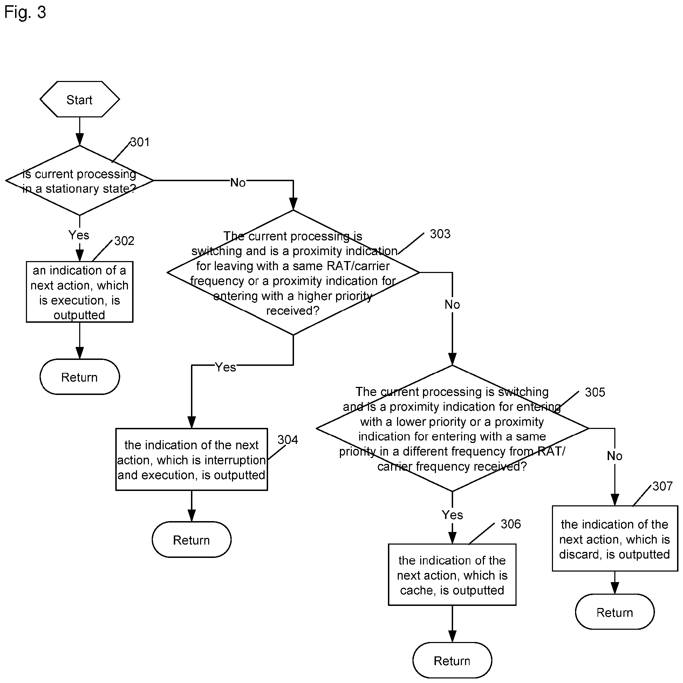

Fig. 3 is a flow chart showing a decision process after a proximity indication is received by an eNB according to an embodiment of the present disclosure. As shown in Fig. 3, the process includes steps as follows.

In Step 301, the eNB determines whether a state of current processing is a stationary state, if so, the process goes to Step 302; otherwise, the process goes to Step 303.

In Step 302, the eNB outputs an indication of a next action which is execution.

In Step 302, during the switching and when a proximity indication for leaving with a same RAT/carrier frequency or a proximity indication for entering with a higher priority is received, the process goes to Step 304; otherwise, the process goes to Step 305.

In Step 304, the eNB outputs an indication of a next action which is interruption and execution.

In Step 305, during the switching and when a proximity indication for entering a higher priority or a same priority in a different RAT/carrier frequency is received, the process goes to Step 306; otherwise, the process goes to Step 307.

In Step 306, the eNB outputs the indication of the next action which is interruption and execution.

In Step 307, the eNB outputs an indication of a next action which is discard.

Herein, the indication of the next action which is discard may be outputted in other cases.

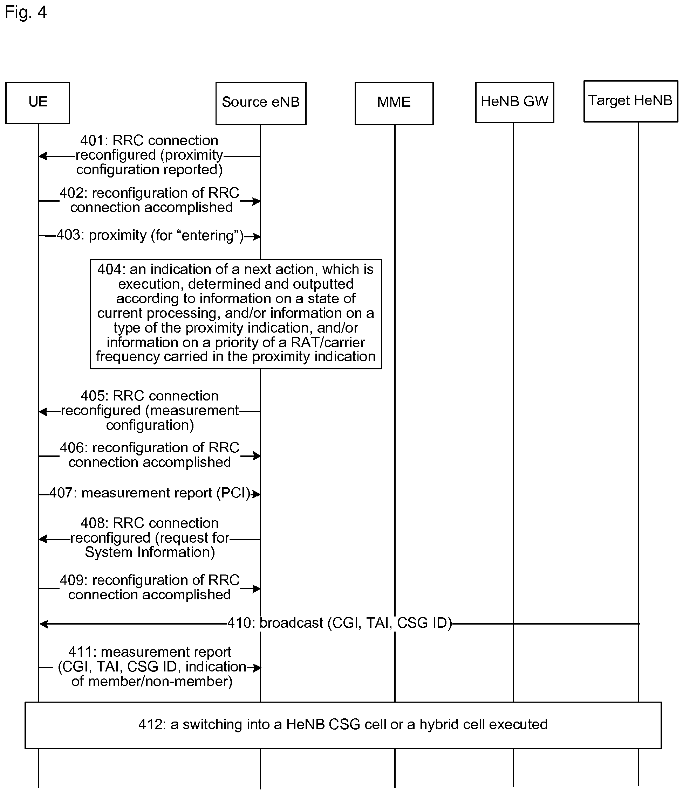

Fig. 4 is a flow chart of a process in which an eNB receives a proximity indication for entering and then executes the proximity indication immediately according to an embodiment of the present disclosure. As shown in Fig. 4, the process includes steps as follows.

In Step 401, a source eNB configures a proximity indication control for UE through a message for a reconfiguration of Radio Resource Control (RRC) connection.

In Step 402, the UE returns a message of an accomplished reconfiguration of RRC connection to the source eNB.

In Step 403, when the UE determines that the UE approaches a CSG cell whose CSG ID is present in a white list of CSGs for the UE, the UE sends a proximity indication for entering.

Herein, the proximity indication includes a RAT and carrier frequency of the CSG cell.

In Step 404, the source eNB determines and outputs an indication of a next action which is execution according to information on a state of current processing, and/or information on a type of the proximity indication, and/or information on a priority of a RAT/carrier frequency carried in the proximity indication.

In Step 405, the source eNB determines whether a measurement configuration corresponding to the RAT/carrier frequency exits, if not, a measurement configuration is configured for the UE via the message for the reconfiguration of RRC connection and the measurement configuration includes measurement gap.

In Step 406, the UE returns a message of an accomplished reconfiguration of RRC connection to the source eNB.

In Step 407, the UE sends a measurement report including a PCI to the source eNB.

In Step 408, the source eNB configures the UE, via the message for the reconfiguration of RRC connection, to capture System Information (SI) and reports a specific PCI.

In Step 409, the UE returns a message of an accomplished reconfiguration of RRC connection to the source eNB.

In Step 410, the UE captures the SI in an automatic interval.

Herein, in order to capture the SI relating to a target HeNB, the UE may suspend sending/receiving with the eNB.

In Step 411, the UE sends, to the source eNB, a measurement report which includes an evolved Cell Global identifier (CGI), a Tracking Area identifier (TAI), a Closed Subscriber Group identifier (CSG ID) and an indication of member/non-member.

In Step 412, the source eNB executes sswitching based on X2 or S1, i.e., the source eNB executes the switching to a HeNB CSG cell or a hybrid cell.

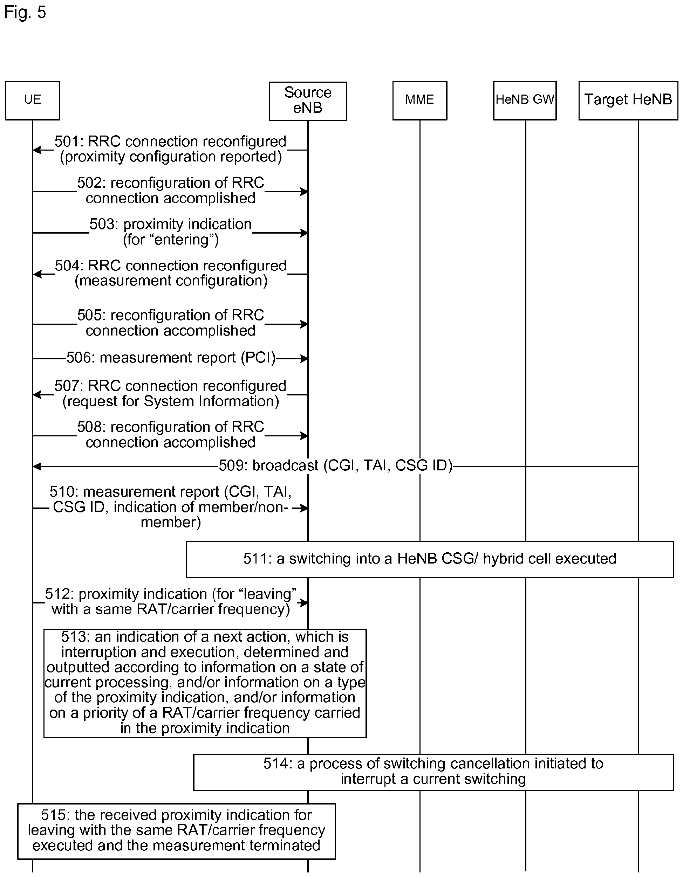

Fig. 5 is a flowchart of a process in which a current process is interrupted and a proximity indication is executed when an eNB receives a proximity indication for leaving with a same RAT/carrier frequency during the switching to a HeNB CSG/hybrid cell according to an embodiment of the present disclosure. As shown in Fig. 5, the process includes steps as follows.

In Step 501, a source eNB configures a proximity indication control for UE through a message for a reconfiguration of RRC connection.

In Step 502, the UE returns a message of an accomplished reconfiguration of RRC connection to the source eNB.

In Step 503, when the UE determines that the UE approaches a CSG cell whose CSG ID is present in a white list of CSGs for the UE, the UE sends a proximity indication for entering.

Herein, the proximity indication includes a RAT and carrier frequency of the CSG cell.

In Step 504, the source eNB determines whether a measurement configuration corresponding to the RAT/carrier frequency exits, if not, a measurement configuration is configured for the UE via the message for the reconfiguration of RRC connection and the measurement configuration includes measurement gap.

In Step 505, the UE returns a message of an accomplished reconfiguration of RRC connection to the source eNB.

In Step 506, the UE sends a measurement report including a PCI to the source eNB.

In Step 507, the source eNB configures the UE, via the message for the reconfiguration of RRC connection, to capture SI and report a specific PCI.

In Step 508, the UE returns a message of an accomplished reconfiguration of RRC connection to the source eNB.

In Step 509, the UE captures the SI in an automatic interval.

In Step 510, the UE sends, to the source eNB, a measurement report which includes an evolved CGI, a TAI, a CSG ID and an indication of member/non-member.

In Step 511, the source eNB executes switching to a HeNB CSG cell or a hybrid cell.

In Step 512, during the switching, the UE, which leaves all CSG cells with a same RAT/carrier frequency, sends a proximity indication for leaving to the source eNB.

In Step 513, the source eNB acquires information on a state of current processing, and/or information on a type of the proximity indication, and/or information on a priority of a RAT/carrier frequency carried in the proximity indication, and then determines and outputs an indication of a next action which is interruption and execution according to the information on a state of current processing, and/or the information on a type of the proximity indication, and/or the information on a priority of a RAT/carrier frequency carried in the proximity indication.

In Step 514, the source eNB initiates a process of switching cancellation to interrupt a current switching.

In Step 515, the source eNB executes the received proximity indication for leaving with the same RAT/carrier frequency and terminates the measurement.

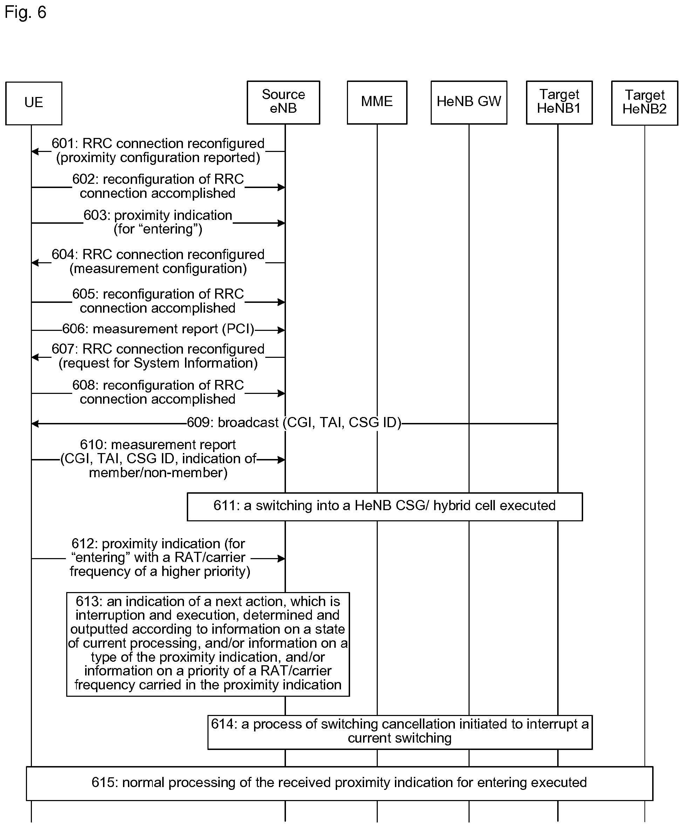

Fig. 6 is a flowchart of a process in which a current process is interrupted and a proximity indication is executed when an eNB receives a proximity indication for entering with a RAT/carrier frequency of a higher priority during the switching to a HeNB CSG/hybrid cell according to an embodiment of the present disclosure. As shown in Fig. 6, the process includes steps as follows.

In Step 601, a source eNB configures a proximity indication control for UE through a message for a reconfiguration of RRC connection.

In Step 602, the UE returns a message of an accomplished reconfiguration of RRC connection to the source eNB.

In Step 603, when the UE determines that the UE approaches a CSG cell whose CSG ID is present in a white list of CSGs for the UE, the UE sends a proximity indication for entering.

Herein, the proximity indication includes a RAT and carrier frequency of the CSG cell.

In Step 604, the source eNB determines whether a measurement configuration corresponding to the RAT/carrier frequency exits, if not, a measurement configuration is configured for the UE via the message for the reconfiguration of RRC connection and the measurement configuration includes measurement gap.

In Step 605, the UE returns a message of an accomplished reconfiguration of RRC connection to the source eNB.

In Step 606, the UE sends a measurement report including a PCI to the source eNB.

In Step 607, the source eNB configures the UE, via the message for the reconfiguration of RRC connection, to capture SI and report a specific PCI.

In Step 608, the UE returns a message of an accomplished reconfiguration of RRC connection to the source eNB.

In Step 609, the UE captures the SI in an automatic interval.

In Step 610, the UE sends, to the source eNB, a measurement report which includes an E-CGI, a TAI, a CSG ID and an indication of member/non-member.

In Step 611, the source eNB executes switching to a HeNB CSG cell/hybrid cell.

In Step 612, when the UE enters one or more CSG cell with a RAT/carrier frequency of a higher priority and the condition for reporting a proximity indication is satisfied, the UE sends a proximity indication for entering to the source eNB.

In Step 613, the source eNB acquires information on a state of current processing, and/or information on a type of the proximity indication, and/or information on a priority of a RAT/carrier frequency carried in the proximity indication, and then determines and outputs an indication of a next action which is interruption and execution according to the information on a state of current processing, and/or the information on a type of the proximity indication, and/or the information on a priority of a RAT/carrier frequency carried in the proximity indication.

In Step 614, the source eNB initiates a process of switching cancellation to interrupt a current switching.

In Step 615, the source eNB executes normal processing of the received proximity indication for entering.

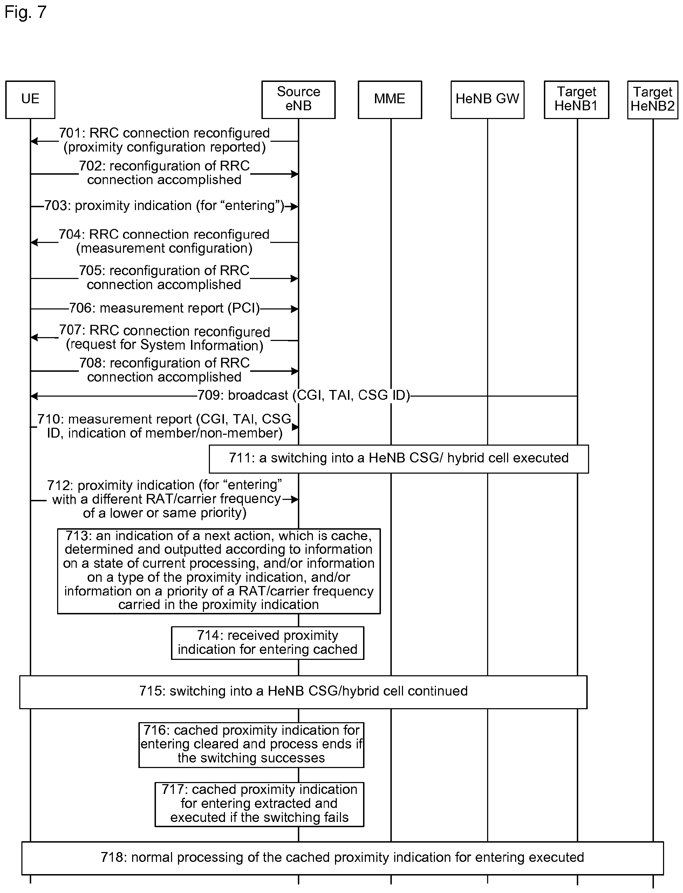

Fig. 7 is a flowchart of a process in which a proximity indication is cached and a current switching is continued when an eNB receives a proximity indication for entering with a different RAT/carrier frequency of a lower or the same priority during switching to a HeNB CSG/hybrid cell according to an embodiment of the present disclosure. As shown in Fig. 7, the process includes steps as follows.

In Step 701, a source eNB configures a proximity indication control for UE through a message for a reconfiguration of RRC connection.

In Step 702, the UE returns a message of an accomplished reconfiguration of RRC connection to the source eNB.

In Step 703, when the UE determines that the UE approaches a CSG cell whose CSG ID is present in a white list of CSGs for the UE, the UE sends a proximity indication for entering.

Herein, the proximity indication includes a RAT and carrier frequency of the CSG cell.

In Step 704, the source eNB determines whether a measurement configuration corresponding to the RAT/carrier frequency exits, if not, a measurement configuration is configured for the UE via the message for the reconfiguration of RRC connection and the measurement configuration includes measurement gap.

In Step 705, the UE returns a message of an accomplished reconfiguration of RRC connection to the source eNB.

In Step 706, the UE sends a measurement report including a PCI to the source eNB.

In Step 707, the source eNB configures the UE, via the message for the reconfiguration of RRC connection, to capture SI and report a specific PCI.

In Step 708, the UE returns a message of an accomplished reconfiguration of RRC connection to the source eNB.

In Step 709, the UE captures the SI in an automatic interval.

In Step 710, the UE sends, to the source eNB, a measurement report which includes an E-CGI, a TAI, a CSG ID and an indication of member/non-member.

In Step 711, the source eNB executes switching to a HeNB CSG cell/hybrid cell.

In Step 712, when the UE enters one or more CSG cell with a RAT/carrier frequency of a lower or same priority and the condition for reporting a proximity indication is satisfied, the UE sends a proximity indication for entering to the source eNB.

In Step 713, the source eNB acquires information on a state of current processing, and/or information on a type of the proximity indication, and/or information on a priority of a RAT/carrier frequency carried in the proximity indication, and then determines and outputs an indication of a next action which is cache according to the information on a state of current processing, and/or the information on a type of the proximity indication, and/or the information on a priority of a RAT/carrier frequency carried in the proximity indication.

In Step 714, the source eNB caches the received proximity indication for entering with the RAT/carrier frequency of a lower or same priority.

In Step 715, a switching to aHeNB CSG/hybrid cell is continued.

In Step 716, if the switching to the HeNB CSG/hybrid cell successes, the eNB clear the cached proximity indication for entering, and the process is ended.

In Step 717, if the switching to the HeNB CSG/hybrid cell fails, the eNB reads the cached proximity indication for entering.

In Step 718, the source eNB executes normal processing of the proximity indication for entering.

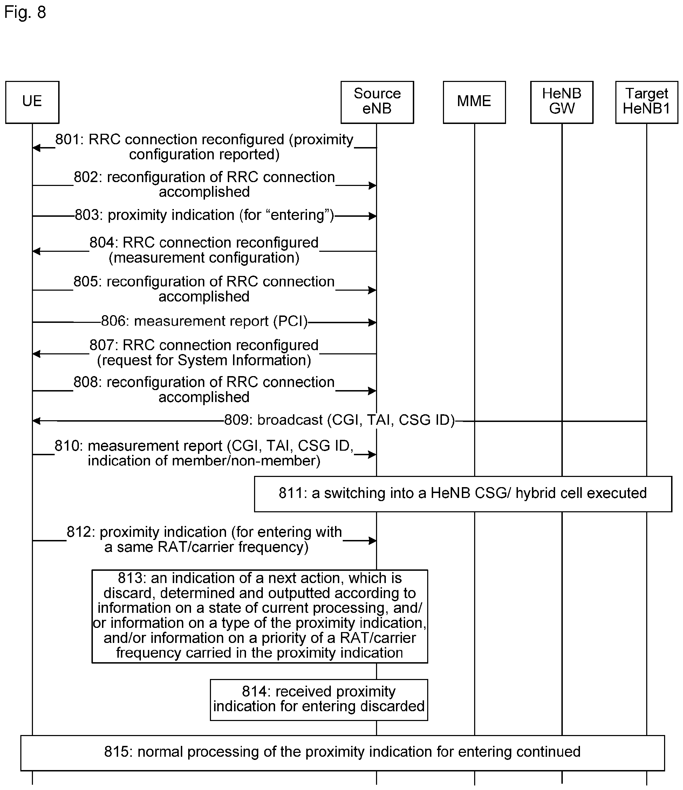

Fig. 8 is a flowchart of a process in which a proximity indication is discarded when a source eNB receives a proximity indication for entering with a same RAT/carrier frequency during a switching to a HeNB CSG/hybrid cell according to an embodiment of the present disclosure. As shown in Fig. 8, the process includes steps as follows.

In Step 801, a source eNB configures a proximity indication control for UE through a message for a reconfiguration of RRC connection.

In Step 802, the UE returns a message of an accomplished reconfiguration of RRC connection to the source eNB.

In Step 803, when the UE determines that the UE approaches a CSG cell whose CSG ID is present in a white list of CSGs for the UE, the UE sends a proximity indication for entering.

Herein, the proximity indication includes a RAT and carrier frequency of the CSG cell.

In Step 804, the source eNB determines that the indication of the next action is execution according to a strategy, the source eNB determines whether a measurement configuration corresponding to the RAT/carrier frequency exits, if not, a measurement configuration is configured for the UE via the message for the reconfiguration of RRC connection and the measurement configuration includes measurement gap.

In Step 805, the UE returns a message of an accomplished reconfiguration of RRC connection to the source eNB.

In Step 806, the UE sends a measurement report including a PCI to the source eNB.

In Step 807, the source eNB configures the UE, via the message for the reconfiguration of RRC connection, to capture SI and report a specific PCI.

In Step 808, the UE returns a message of an accomplished reconfiguration of RRC connection to the source eNB.

In Step 809, the UE captures the SI in an automatic interval.

In Step 810, the UE sends, to the source eNB, a measurement report which includes an E-CGI, a TAI, a CSG ID and an indication of member/non-member.

In Step 811, the source eNB executes a switching to a HeNB CSG cell/hybrid cell.

In Step 812, when the UE enters a CSG cell with a certain RAT/carrier frequency and the condition for reporting a proximity indication is satisfied, the UE sends a proximity indication for entering to the source eNB.

In Step 813, the source eNB acquires information on a state of current processing, and/or information on a type of the proximity indication, and/or information on a priority of a RAT/carrier frequency carried in the proximity indication, and then determines and outputs an indication of a next action which is discard according to the information on a state of current processing, and/or the information on a type of the proximity indication, and/or the information on a priority of a RAT/carrier frequency carried in the proximity indication.

In Step 814, the source eNB discards the received proximity indication for entering.

In Step 815, the source eNB continues the switching to a HeNB CSG cell/hybrid cell.

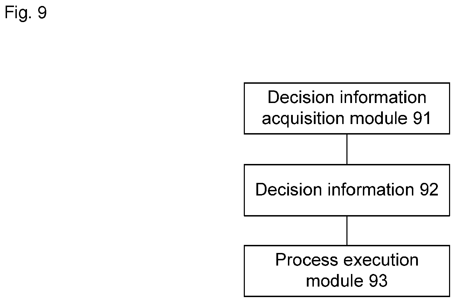

Fig. 9 is a diagram of the component and structure of a device for mobility processing according to an embodiment of the present disclosure. As shown in Fig. 9, the device includes a decision information acquisition module 91, a decision module 92 and a process execution module 93.

The decision information acquisition module 91 is configured to acquire decision information on an action relating to the UE when a proximity indication reported by UE is received.

The decision module 92 is configured to determine an indication of a next action according to the decision information.

The process execution module 93 is configured to execute the next action according to the indication of the next action.

Herein, the decision information may include at least one of the follows:
information on a state of current processing, information on a type of the proximity indication, and information on a priority of RAT/carrier frequency carried in the proximity indication relative to RAT/carrier frequency of a target cell in switching.

Herein, the indication of the next action may include at least one of the follows: execution, interruption and execution, cache and discard.

Herein, the state of current processing may include a stationary state and a non-stationary state which may include a switching phase.

Herein, the type of the proximity indication includes a proximity indication for entering and a proximity indication for leaving.

Specifically, the decision information acquisition module 91 is further configured to determine the priority of the RAT/carrier frequency carried in the proximity indication relative to the RAT/carrier frequency of the target cell in switching according to configured information acquired from a background network manager when the RAT/carrier frequency carried in the proximity indication is received.

The configured information is priority information configured for different RATs/carrier frequencies through the background network manager;
Specifically, the decision information acquisition module 91 may be further configured to determine whether the RAT/carrier frequency carried in the proximity indication is the same as the RAT/carrier frequency of the target cell in switching.

The decision module 92 is configured to:
when a state of current processing is a stationary state, the indication of the next action is determined as execution;
when a state of current processing is a non-stationary state, determine the indication of the next action as interruption and execution when the proximity indication is a proximity indication for leaving in a same frequency or a proximity indication for entering with a higher priority; determine the indication of the next action as cache when the proximity indication is a proximity indication for entering with a lower priority a same priority in a different frequency; otherwise, determine the indication of the next action as discard.

Specifically, the process execution module 93 may be further configured to:
when the indication of the next action is execution, immediately execute a received proximity indication ;
when the indication of the next action is interruption and execution, interrupt a current process and execute the received proximity indication;
when the indication of the next action is cache, cache the received proximity indication, continue the current processing, read and execute the cached proximity indication after the current processing is finished;
when the indication of the next action is discard, discard the received proximity indication and continue the current processing.

Herein, the decision information acquisition module 91 may further include a state module 911, a priority module 912 and a type module 913.

The state module 911 is configured to acquire information on a state of current processing.

The priority module 912 is configured to acquire information on a priority of RAT/carrier frequency carried in the proximity indication relative to RAT/carrier frequency of a target cell in switching.

The type module 913 is configured to acquire information on a type of the proximity indication.

Specifically, the priority module 912 may be further configured to determine whether the RAT/carrier frequency carried in the proximity indication is the same as the RAT/carrier frequency of the target cell in switching.

Herein, the device may be arranged in an eNB.

In practice, the decision information acquisition module may be implemented by a Central Processing Unit (CPU), Digital Signal Processor (DSP) or Field-Programmable Gate Array (FPGA) in the device for mobility processing in combination with a transceiver. The decision module and the process execution module may be implemented by a CPU, DSP or FPGA in the device for mobility processing.

Those skilled in the art should understand that the achieved functions of processing modules in the device for mobility processing as shown in figure 9 may understood by reference to the description related to the method for mobility processing. Those skilled in the art should understand that the functions of processing modules in the device for mobility processing as shown in figure 9 may be implemented by a programme running on a processor or by a specific logic circuit.

Those skilled in the art should understand that the embodiments of the present disclosure may be a method, a system or a computer programme product. Therefore, the present disclosure may take the form of a hardware embodiment, a software embodiment, or an embodiment combining hardware and software. Moreover, the present disclosure may take the form of a computer programme product which is embodied on one or more computer-usable storage media (including but not limited to disk storage, optical storage and so forth) containing computer-usable programme codes.

The present disclosure is described by reference to flowcharts and/or block diagrams of the method, device (system) and computer programme product of the embodiments of the present disclosure. It should be understood that each of the processes and/or blocks and combination thereof are implemented by computer programme instructions. These computer programme instructions may be provided for a processor of a general computer, a dedicated computer, an embedded processor or other programmable data processing devices to form a machine, instructions executed by a processor of a computer or other programmable data processing devices therefore form an apparatus for implementing functions indicated in one or more processes in a flowchart and/or one or more blocks in a block diagram.

The computer program instructions may also be stored in a computer-readable storage which enables a computer or other program data processing devices to operate in a particular way, such that the instructions stored in the computer-readable storage form a manufacture including an instruction apparatus, which implements the functions indicated in one or more processes in a flowchart and/or one or more blocks in a block diagram.

These computer program instructions may be loaded into a computer or other programmable data processing devices, such that the computer or other programmable data processing devices perform a series of operation steps to implement processing realized by the computer, therefore the instructions executed on the computer or other programmable devices are used for implementing steps of functions indicated in one or more processes in a flowchart and/or one or more blocks in a block diagram.

Above description are merely preferred embodiments of the present disclosure, but not to limit the scope of protection of the present disclosure.

## Claims

1. A method for mobility processing, comprising:
after a proximity indication reported by user equipment, UE, is received, acquiring (101), by an evolved Node B, eNB, decision information on an action relating to processing performed by the eNB; and
determining (102), by the eNB, an indication of a next action for processing the received proximity indication according to the decision information and executing (103) the next action according to the indication of the next action;
**characterized in that**, the step of determining the indication of the next action for processing the received proximity indication according to the decision information comprises:
when a current state of the UE is a stationary state, determining the indication of the next action as execution; and
when a current state of the UE is a non-stationary state, in which the eNB executes switching of the UE to a target cell, determining the indication of the next action as interruption and execution when the proximity indication is a proximity indication for leaving in a same frequency or a proximity indication for entering with a higher priority of Radio Access Technology, RAT,/carrier frequency carried in the proximity indication relative to RAT/carrier frequency of the target cell in switching; determining the indication of the next action as cache when the proximity indication is a proximity indication for entering with a lower priority or a same priority of RAT/carrier frequency carried in the proximity indication relative to RAT/carrier frequency of the target cell in switching in a different frequency; otherwise, determining the indication of the next action as discard,
wherein the proximity indication is of a same frequency or a different frequency with respect to a RAT/carrier frequency of the target cell in switching.

2. The method according to claim 1, wherein the decision information comprises at least one of the following:
information on a current state of the UE, information on a type of the proximity indication, and information on a priority of RAT/carrier frequency carried in the proximity indication relative to RAT/carrier frequency of a target cell in switching.

3. The method according to claim 2, wherein the current state of the UE comprises a stationary state and a non-stationary state in which the eNB executes switching of the UE to a target cell, and wherein the type of the proximity indication comprises a proximity indication for entering and a proximity indication for leaving,
when the decision information includes the information on the priority of the RAT/carrier frequency carried in the proximity indication relative to the RAT/carrier frequency of the target cell in switching, the step of acquiring, by the eNB, the decision information on the action relating to the UE comprises:
configuring priorities for different RATs/carrier frequencies through a background network manager;
when the RAT/carrier frequency carried in the proximity indication is received, determining, by the eNB, the priority of the RAT/carrier frequency carried in the proximity indication relative to the RAT/carrier frequency of the target cell in switching according to the configured priorities acquired from the background network manager.

4. The method according to claim 1, wherein the indication of the next action comprises at least one of the following: execution, interruption and execution, cache and discard.

5. The method according to claim 1, wherein the step of executing the indication of the next action according to the indication of the next action comprises:
when the indication of the next action is execution, executing a received proximity indication immediately;
when the indication of the next action is interruption and execution, interrupting current processing and executing the received proximity indication;
when the indication of the next action is cache, caching the received proximity indication, continuing the current processing, reading and executing the cached proximity indication after the current processing is finished; and
when the indication of the next action is discard, discarding the received proximity indication and continuing the current processing.

6. A device for mobility processing, comprising: a decision information acquisition module (91), a decision module (92) and a process execution module (93), wherein
the decision information acquisition module (91) is configured to, when a proximity indication reported by User Equipment, UE, is received, acquire decision information on an action relating to processing performed by the eNB;
the decision module (92) is configured to determine an indication of a next action for processing the received proximity indication for the UE according to the decision information; and
the process execution module (93) is configured to execute the next action according to the indication of the next action;
wherein the decision information acquisition module (91) is further configured to determine whether the RAT/carrier frequency carried in the proximity indication is the same as the RAT/carrier frequency of a target cell in switching;
**characterized in that**, the decision module (92) is configured to:
when a current state of the UE is a stationary state, determining the indication of the next action as execution; and
when a current state of the UE is a non-stationary state, in which the eNB executes switching of the UE to the target cell, determine the indication of the next action as interruption and execution when the proximity indication is a proximity indication for leaving in a same frequency or a proximity indication for entering with a higher priority of RAT/carrier frequency carried in the proximity indication relative to RAT/carrier frequency of the target cell in switching; determine the indication of the next action as cache when the proximity indication is a proximity indication for entering with a lower priority or a same priority of RAT/carrier frequency carried in the proximity indication relative to RAT/carrier frequency of the target cell in switching in a different frequency; otherwise, determine the indication of the next action as discard.

7. The device according to claim 6, wherein the decision information comprises at least one of the following:
information on a current state of the UE, information on a type of the proximity indication, and information on a priority of RAT/carrier frequency carried in the proximity indication relative to RAT/carrier frequency of a target cell in switching.

8. The device according to claim 7, wherein the current state of the UE comprises a stationary state and a non-stationary state in which the eNB executes switching of the UE to a target cell, and wherein the type of the proximity indication comprises a proximity indication for entering and a proximity indication for leaving,
the decision information acquisition module (91) is further configured to, when the RAT/carrier frequency carried in the proximity indication is received, determine the priority of the RAT/carrier frequency carried in the proximity indication relative to the RAT/carrier frequency of the target cell in switching according to configured information acquired from a background network manager;
wherein the configured information is priority information configured for different RATs/carrier frequencies through a background network manager.

9. The device according to claim 6, wherein the indication of the next action comprises at least one of the following: execution, interruption and execution, cache and discard.

10. The device according to claim 6, wherein the process execution module (93) is configured to:
when the indication of the next action is execution, execute a received proximity indication immediately;
when the indication of the next action is interruption and execution, interrupt current processing and execute the received proximity indication;
when the indication of the next action is cache, cache the received proximity indication, continue the current processing, read and execute the cached proximity indication after the current processing is finished; and
when the indication of the next action is discard, discard the received proximity indication and continue the current processing.

11. A computer storage medium having stored therein a set of instructions that, when executed, causes at least one processor to perform the method for mobility processing according to any of claims 1-5.

## Patentansprüche

1. Mobilitätsverarbeitungsverfahren, das umfasst:
nach Empfang einer Näherungsindikation, die von einem Benutzergerät, UE, berichtet wird, Erfassen (101) von Entscheidungsinformationen durch einen Evolved Node B, eNB, zu einer Aktion in Zusammenhang mit einer vom eNB durchgeführten Verarbeitung; und
Ermitteln (102) einer Indikation einer nächsten Aktion für eine Verarbeitung der empfangenen Näherungsindikation gemäß den Entscheidungsinformationen durch den eNB und Ausführen (103) der nächsten Aktion gemäß der Indikation der nächsten Aktion;
**dadurch gekennzeichnet, dass** der Schritt des Ermitteins der Indikation der nächsten Aktion für eine Verarbeitung der empfangenen Näherungsindikation gemäß den Entscheidungsinformationen umfasst:
wenn ein aktueller Status des UE ein stationärer Status ist, Ermitteln der Indikation der nächsten Aktion als Ausführung; und
wenn ein aktueller Status des UE ein nichtstationärer Status ist, bei dem der eNB das Schalten des UE auf eine Zielzelle ausführt, Ermitteln der Indikation der nächsten Aktion als Unterbrechung und Ausführung, wenn die Näherungsindikation eine Näherungsindikation zum Lassen in einer gleichen Frequenz oder eine Näherungsindikation zum Eintreten mit einer höheren Priorität einer Funkzugangstechnologie, RAT/Trägerfrequenz in der Näherungsindikation in Bezug auf eine RAT/Trägerfrequenz der Zielzelle beim Schalten ist; Ermitteln der Indikation der nächsten Aktion als Zwischenspeicherung, wenn die Näherungsindikation eine Näherungsindikation zum Eintreten mit einer geringeren Priorität oder einer gleichen Priorität einer RAT/Trägerfrequenz in der Näherungsindikation in Bezug auf eine RAT/Trägerfrequenz der Zielzelle beim Schalten in eine andere Frequenz ist; ansonsten Ermitteln der Indikation der nächsten Aktion als Verwerfen,
wobei die Näherungsindikation in Bezug auf eine RAT/Trägerfrequenz der Zielzelle beim Schalten eine gleiche Frequenz oder eine andere Frequenz aufweist.

2. Verfahren nach Anspruch 1, wobei die Entscheidungsinformationen zumindest eines des Folgenden umfassen:
Informationen zu einem aktuellen Status der UE, Informationen zu einem Typ der Näherungsindikation und Informationen zu einer Priorität einer RAT/Trägerfrequenz in der Näherungsindikation in Bezug auf eine RAT/Trägerfrequenz einer Zielzelle beim Schalten.

3. Verfahren nach Anspruch 2, wobei der aktuelle Status des UE einen stationären Status und einen nichtstationären Status umfasst, bei dem der eNB ein Schalten des UE auf eine Zielzelle ausführt, und wobei der Typ der Näherungsindikation eine Näherungsindikation zum Eintreten und eine Näherungsindikation zum Verlassen umfasst,
wenn die Entscheidungsinformationen die Informationen zur Priorität der RAT/Trägerfrequenz in der Näherungsindikation in Bezug auf die RAT/Trägerfrequenz der Zielzelle beim Schalten umfasst, der Schritt des Erfassens der Entscheidungsinformationen zur Aktion in Zusammenhang mit der UE durch den eNB umfasst:
Konfigurieren von Prioritäten für unterschiedliche RATs/Trägerfrequenzen durch einen Hintergrundnetzmanager;
wenn die RAT/Trägerfrequenz in der Näherungsindikation empfangen wird, Ermitteln der Priorität der RAT/Trägerfrequenz in der Näherungsindikation in Bezug auf die RAT/Trägerfrequenz der Zielzelle beim Schalten gemäß den konfigurierten Prioritäten, wie vom Hintergrundnetzmanager erfasst, durch den eNB.

4. Verfahren nach Anspruch 1, wobei die Indikation der nächsten Aktion zumindest eines des Folgenden umfasst: Ausführung, Unterbrechung und Ausführung, Zwischenspeicherung und Verwerfen.

5. Verfahren nach Anspruch 1, wobei der Schritt des Ausführens der Indikation der nächsten Aktion gemäß der Indikation der nächsten Aktion umfasst:
wenn die Indikation der nächsten Aktion Ausführung umfasst, sofortiges Ausführen einer empfangenen Näherungsindikation;
wenn die Indikation der nächsten Aktion Unterbrechung und Ausführung ist, Unterbrechen einer aktuellen Verarbeitung und Ausführen der empfangenen Näherungsindikation;
wenn die Indikation der nächsten Aktion Zwischenspeicherung ist, Zwischenspeichern der empfangenen Näherungsindikation, Fortsetzen der aktuellen Verarbeitung, Lesen und Ausführen der zwischengespeicherten Näherungsindikation nach Beendigung der aktuellen Verarbeitung; und
wenn die Indikation der nächsten Aktion Verwerfen ist, Verwerfen der empfangenen Näherungsindikation und Fortsetzen der aktuellen Verarbeitung.

6. Mobilitätsverarbeitungsvorrichtung, die umfasst: ein Entscheidungsinformationserfassungsmodul (91), ein Entscheidungsmodul (92) und ein Prozessausführungsmodul (93), wobei
wenn das Entscheidungsinformationserfassungsmodul (91) so konfiguriert ist, dass es, wenn eine von einem Benutzergerät, UE, berichtete Näherungsindikation empfangen wird, Entscheidungsinformationen zu einer Aktion in Zusammenhang mit einer vom eNB durchgeführten Verarbeitung erfasst;
das Entscheidungsmodul (92) so konfiguriert ist, dass es eine Indikation einer nächsten Aktion für eine Verarbeitung der empfangenen Näherungsindikation für das UE gemäß den Entscheidungsinformationen ermittelt; und
ein Prozessausführungsmodul (93) so konfiguriert ist, dass es die nächste Aktion gemäß der Indikation der nächsten Aktion ausführt;
wobei das Entscheidungsinformationserfassungsmodul (91) ferner so konfiguriert ist, dass es ermittelt, ob die RAT/Trägerfrequenz in der Näherungsindikation die gleiche wie die RAT/Trägerfrequenz einer Zielzelle beim Schalten ist;
**dadurch gekennzeichnet, dass** das Entscheidungsmodul (92) konfiguriert ist zum:
wenn ein aktueller Status des UE ein stationärer Status ist, Ermitteln der Indikation der nächsten Aktion als Ausführung; und
wenn ein aktueller Status des UE ein nichtstationärer Status ist, bei dem der eNB das Schalten des UE auf eine Zielzelle ausführt, Ermitteln der Indikation der nächsten Aktion als Unterbrechung und Ausführung, wenn die Näherungsindikation eine Näherungsindikation zum Lassen in einer gleichen Frequenz oder eine Näherungsindikation zum Eintreten mit einer höheren Priorität einer RAT/Trägerfrequenz in der Näherungsindikation in Bezug auf eine RAT/Trägerfrequenz der Zielzelle beim Schalten ist; Ermitteln der Indikation der nächsten Aktion als Zwischenspeicherung, wenn die Näherungsindikation eine Näherungsindikation zum Eintreten mit einer geringeren Priorität oder einer gleichen Priorität einer RAT/Trägerfrequenz in der Näherungsindikation in Bezug auf eine RAT/Trägerfrequenz der Zielzelle beim Schalten in eine andere Frequenz ist; ansonsten Ermitteln der Indikation der nächsten Aktion als Verwerfen.

7. Vorrichtung nach Anspruch 6, wobei die Entscheidungsinformationen zumindest eines des Folgenden umfassen:
Informationen zu einem aktuellen Status der UE, Informationen zu einem Typ der Näherungsindikation und Informationen zu einer Priorität einer RAT/Trägerfrequenz in der Näherungsindikation in Bezug auf eine RAT/Trägerfrequenz einer Zielzelle beim Schalten.

8. Vorrichtung nach Anspruch 7, wobei der aktuelle Status des UE einen stationären Status und einen nichtstationären Status umfasst, bei dem der eNB ein Schalten des UE auf eine Zielzelle ausführt, und wobei der Typ der Näherungsindikation eine Näherungsindikation zum Eintreten und eine Näherungsindikation zum Verlassen umfasst,
das Entscheidungsinformationserfassungsmodul (91) ferner so konfiguriert ist, dass es, wenn die RAT/Trägerfrequenz in der Näherungsindikation empfangen wird, die Priorität der RAT/Trägerfrequenz in der Näherungsindikation in Bezug auf die RAT/Trägerfrequenz der Zielzelle beim Schalten gemäß konfigurierten Informationen ermittelt, wie von einem Hintergrundnetzmanager erfasst;
wobei die konfigurierten Informationen Prioritätsinformationen sind, die für unterschiedliche RATs/Trägerfrequenzen konfiguriert sind, durch einen Hintergrundnetzmanager.

9. Vorrichtung nach Anspruch 6, wobei die Indikation der nächsten Aktion zumindest eines des Folgenden umfasst: Ausführung, Unterbrechung und Ausführung, Zwischenspeicherung und Verwerfen.

10. Vorrichtung nach Anspruch 6, wobei das Prozessausführungsmodul (93) konfiguriert ist zum:
wenn die Indikation der nächsten Aktion Ausführung ist, direkten Ausführen einer empfangenen Näherungsindikation;
wenn die Indikation der nächsten Aktion Unterbrechung und Ausführung ist, Unterbrechen einer aktuellen Verarbeitung und Ausführen der empfangenen Näherungsindikation;
wenn die Indikation der nächsten Aktion Zwischenspeicherung ist, Zwischenspeichern der empfangenen Näherungsindikation, Fortsetzen der aktuellen Verarbeitung, Lesen und Ausführen der zwischengespeicherten Näherungsindikation nach Beendigung der aktuellen Verarbeitung; und
wenn die Indikation der nächsten Aktion Verwerfen ist, Verwerfen der empfangenen Näherungsindikation und Fortsetzen der aktuellen Verarbeitung.

11. Computerspeichermedium, in dem ein Satz von Anweisungen gespeichert ist, der bei Ausführung zumindest einen Prozessor dazu veranlasst, das Mobilitätsverarbeitungsverfahren nach einem der Ansprüche 1 bis 5 durchzuführen.

## Revendications

1. Procédé de traitement de mobilité, comprenant :
après qu'une indication de proximité rapportée par un équipement d'utilisateur, UE, a été reçue, l'acquisition (101), par un noeud B évolué, eNB, d'informations de décision concernant une action relative au traitement effectué par l'eNB ; et
la détermination (102), par l'eNB, d'une indication d'une action suivante pour traiter l'indication de proximité reçue conformément aux informations de décision et l'exécution (103) de l'action suivante conformément à l'indication de l'action suivante ;
**caractérisé en ce que** l'étape de détermination de l'indication de l'action suivante pour traiter l'indication de proximité reçue conformément aux informations de décision comprend :
lorsqu'un état actuel de l'UE est un état stationnaire, la détermination de l'indication de l'action suivante en tant qu'exécution ; et
lorsqu'un état actuel de l'UE est un état non stationnaire, dans lequel l'eNB exécute une commutation de l'UE vers une cellule cible, la détermination de l'indication de l'action suivante en tant qu'interruption et exécution lorsque l'indication de proximité est une indication de proximité pour quitter dans une même fréquence ou une indication de proximité pour entrer avec une priorité plus élevée d'une technologie d'accès radio, RAT/fréquence de porteuse transportée dans l'indication de proximité par rapport à la RAT/fréquence de porteuse de la cellule cible dans la commutation ;
la détermination de l'indication de l'action suivante en tant que mise en mémoire cache lorsque l'indication de proximité est une indication de proximité pour entrer avec une priorité plus faible ou une même priorité de la RAT/fréquence de porteuse transportée dans l'indication de proximité par rapport à la RAT/fréquence de porteuse de la cellule cible dans la commutation dans une fréquence différente ; autrement, la détermination de l'indication de l'action suivante en tant qu'abandon,
dans lequel l'indication de proximité est d'une même fréquence ou d'une fréquence différente par rapport à une RAT/fréquence de porteuse de la cellule cible dans une commutation.

2. Procédé selon la revendication 1, dans lequel les informations de décision comprennent au moins l'une des informations suivantes :
des informations concernant un état actuel de l'UE, des informations concernant un type de l'indication de proximité, et des informations concernant une priorité de la RAT/fréquence de porteuse transportée dans l'indication de proximité par rapport à la RAT/fréquence de porteuse d'une cellule cible dans la commutation.

3. Procédé selon la revendication 2, dans lequel l'état actuel de l'UE comprend un état stationnaire et un état non stationnaire dans lesquels l'eNB exécute la commutation de l'UE vers une cellule cible, et dans lequel le type de l'indication de proximité comprend une indication de proximité pour entrer et une indication de proximité pour quitter,
lorsque les informations de décision comprennent les informations concernant la priorité de la RAT/fréquence de porteuse transportée dans l'indication de proximité par rapport à la RAT/fréquence de porteuse de la cellule cible dans la commutation, l'étape d'acquisition, par l'eNB, des informations de décision concernant l'action relative à l'UE, comprend :
la configuration de priorités pour différentes RAT/fréquences de porteuse par l'intermédiaire d'un gestionnaire de réseau d'arrière-plan ;
lorsque la RAT/fréquence de porteuse transportée dans l'indication de proximité est reçue, la détermination, par l'eNB, de la priorité de la RAT/fréquence de porteuse transportée dans l'indication de proximité par rapport à la RAT/fréquence de porteuse de la cellule cible dans la commutation conformément aux priorités configurées acquises à partir du gestionnaire de réseau d'arrière-plan.

4. Procédé selon la revendication 1, dans lequel l'indication de l'action suivante comprend au moins l'une des actions suivantes : une exécution, une interruption et une exécution, une mise en mémoire cache et un abandon.

5. Procédé selon la revendication 1, dans lequel l'étape d'exécution de l'indication de l'action suivante conformément à l'indication de l'action suivante comprend :
lorsque l'indication de l'action suivante est une exécution, l'exécution d'une indication de proximité reçue immédiatement ;
lorsque l'indication de l'action suivante est une interruption et une exécution, l'interruption du traitement actuel et l'exécution de l'indication de proximité reçue ;
lorsque l'indication de l'action suivante est une mise en mémoire cache, la mise en mémoire cache de l'indication de proximité reçue, la poursuite du traitement actuel, la lecture et l'exécution de l'indication de proximité en mémoire cache à la fin du traitement actuel ; et
lorsque l'indication de l'action suivante est un abandon, l'abandon de l'indication de proximité reçue et la poursuite du traitement actuel.

6. Dispositif de traitement de mobilité, comprenant : un module d'acquisition d'informations de décision (91), un module de décision (92) et un module d'exécution de processus (93), dans lequel
le module d'acquisition d'informations de décision (91) est configuré pour, lorsqu'une indication de proximité rapportée par un équipement d'utilisateur, UE, est reçue, acquérir des informations de décision concernant une action relative au traitement effectué par l'eNB ;
le module de décision (92) est configuré pour déterminer une indication d'une action suivante pour traiter l'indication de proximité reçue pour l'UE conformément aux informations de décision ; et
le module d'exécution de processus (93) est configuré pour exécuter l'action suivante conformément à l'indication de l'action suivante ;
dans lequel le module d'acquisition d'informations de décision (91) est en outre configuré pour déterminer si la RAT/fréquence de porteuse transportée dans l'indication de proximité est identique à la RAT/fréquence de porteuse d'une cellule cible dans la commutation ;
**caractérisé en ce que** le module de décision (92) est configuré pour :
lorsqu'un état actuel de l'UE est un état stationnaire, déterminer l'indication de l'action suivante en tant qu'exécution ; et
lorsqu'un état actuel de l'UE est un état non stationnaire, dans lequel l'eNB exécute une commutation de l'UE vers la cellule cible, déterminer l'indication de l'action suivante en tant qu'interruption et exécution lorsque l'indication de proximité est une indication de proximité pour quitter dans une même fréquence ou une indication de proximité pour entrer avec une priorité plus élevée de la RAT/fréquence de porteuse transportée dans l'indication de proximité par rapport à la RAT/fréquence de porteuse de la cellule cible dans la commutation ;
déterminer l'indication de l'action suivante en tant que mise en mémoire cache lorsque l'indication de proximité est une indication de proximité pour entrer avec une priorité plus faible ou avec une même priorité de la RAT/fréquence de porteuse transportée dans l'indication de proximité par rapport à la RAT/fréquence de porteuse de la cellule cible dans la commutation dans une fréquence différente ; autrement, déterminer l'indication de l'action suivante en tant qu'abandon.

7. Dispositif selon la revendication 6, dans lequel les informations de décision comprennent au moins l'une des informations suivantes :
des informations concernant un état actuel de l'UE, des informations concernant un type de l'indication de proximité, et des informations concernant une priorité de la RAT/fréquence de porteuse transportée dans l'indication de proximité par rapport à la RAT/fréquence de porteuse d'une cellule cible dans la commutation.

8. Dispositif selon la revendication 7, dans lequel l'état actuel de l'UE comprend un état stationnaire et un état non stationnaire dans lesquels l'eNB exécute une commutation de l'UE vers une cellule cible, et dans lequel le type de l'indication de proximité comprend une indication de proximité pour entrer et une indication de proximité pour quitter,
le module d'acquisition d'informations de décision (91) est en outre configuré pour, lorsque la RAT/fréquence de porteuse transportée dans l'indication de proximité est reçue, déterminer la priorité de la RAT/fréquence de porteuse transportée dans l'indication de proximité par rapport à la RAT/fréquence de porteuse de la cellule cible dans la commutation conformément aux informations configurées acquises à partir d'un gestionnaire de réseau d'arrière-plan ;
dans lequel les informations configurées sont des informations de priorité configurées pour différentes RAT/fréquences de porteuse par l'intermédiaire d'un gestionnaire de réseau d'arrière-plan.

9. Dispositif selon la revendication 6, dans lequel l'indication de l'action suivante comprend au moins l'une des actions suivantes : une exécution, une interruption et une exécution, une mise en mémoire cache et un abandon.

10. Dispositif selon la revendication 6, dans lequel le module d'exécution de processus (93) est configuré pour :
lorsque l'indication de l'action suivante est une exécution, exécuter une indication de proximité reçue immédiatement ;
lorsque l'indication de l'action suivante est une interruption et une exécution, interrompre le traitement actuel et exécuter l'indication de proximité reçue ;
lorsque l'indication de l'action suivante est une mise en mémoire cache, mettre en mémoire cache l'indication de proximité reçue, poursuivre le traitement actuel, lire et exécuter l'indication de proximité en mémoire cache à la fin du traitement actuel ; et
lorsque l'indication de l'action suivante est un abandon, abandonner l'indication de proximité reçue et poursuivre le traitement actuel.

11. Support de mémorisation d'ordinateur sur lequel un jeu d'instructions est mémorisé qui, lorsqu'elles sont exécutées, amènent au moins un processeur à effectuer le procédé de traitement de mobilité selon l'une quelconque des revendications 1 à 5.
